# EUROPEAN PATENT APPLICATION

(11) **EP 2 157 810 A1**
(43) Date of publication of application: **24.02.2010**
(21) Application number: 08741002.3
(22) Date of filing: 01.05.2008
(51) Int. Cl.: H04Q 7/32

(54) **RECEPTION CYCLE CONTROL METHOD, RADIO BASE STATION, AND MOBILE STATION**

(30) Priority: 01.05.2007 JP 2007121198
(71) Applicant: NTT DoCoMo, Inc., Chiyoda-ku Tokyo 100-6150 (JP)
(72) Inventor: HARADA, Atsushi, Chiyoda-ku Tokyo 100-6150 (JP); UMESH, Anil, Chiyoda-ku Tokyo 100-6150 (JP)
(74) Representative: HOFFMANN EITLE
(86) International application number: PCT/JP2008/058368
(87) International publication number: WO 2008/139957

(57) **Abstract**

A radio base station (eNB) starts a transmitting-side timer upon transmission of downlink data; and changes a reception cycle of downlink data in a mobile station (UE), when transmitting no downlink data during a period from start to expiration of the transmitting-side timer. The mobile station (UE) starts a receiving-side timer upon receipt of downlink data transmitted; and changes a reception cycle of downlink data in the mobile station (UE), when receiving no downlink data during a period from start to expiration of the receiving-side timer.

## Description

### Technical Field

The present invention relates to a reception cycle control method for enabling a mobile station and a radio base station to control a reception cycle in the mobile station of downlink data to be transmitted from the radio base station to the mobile station, and relates to the mobile station and the radio base station.

### BACKGROUND ART

3GPP, which is a group working on standardization of the third generation mobile communication system, has been conducting studies collectively called "LTE (Long Term Evolution)" in order to achieve significant increase in transmission speed and reduction in transmission delay in a radio access network (RAN: Radio Access Network), and has been pursuing formulation of standardized specifications for constituent technologies relating to the studies.

Additionally, a radio access scheme based on the LTE or the like is configured to employ a DRX (Discontinuous) technology in order to save power consumption in a mobile station UE.

Specifically, in a mobile communication system based on the LTE scheme, a radio base station eNB and a mobile station UE are both configured to change reception cycles of downlink data in the mobile station UE by use of Inactive timers.
Non-patent Document 1: 3GPP TSG RAN WG2 Meeting #57bis R2-071553 (Mar. 26, 2007)

### DISCLOSURE OF THE INVENTION

However, the above described conventional mobile communication system based on the LTE scheme has a problem that downlink data loss is likely to occur due to disagreement between "a reception cycle of downlink data (a continuous reception cycle or a DRX cycle (discontinuous reception cycle)) in a mobile station UE" that is managed by a radio base station eNB, and "a reception cycle of downlink data in the mobile station UE" that is managed by the mobile station UE.

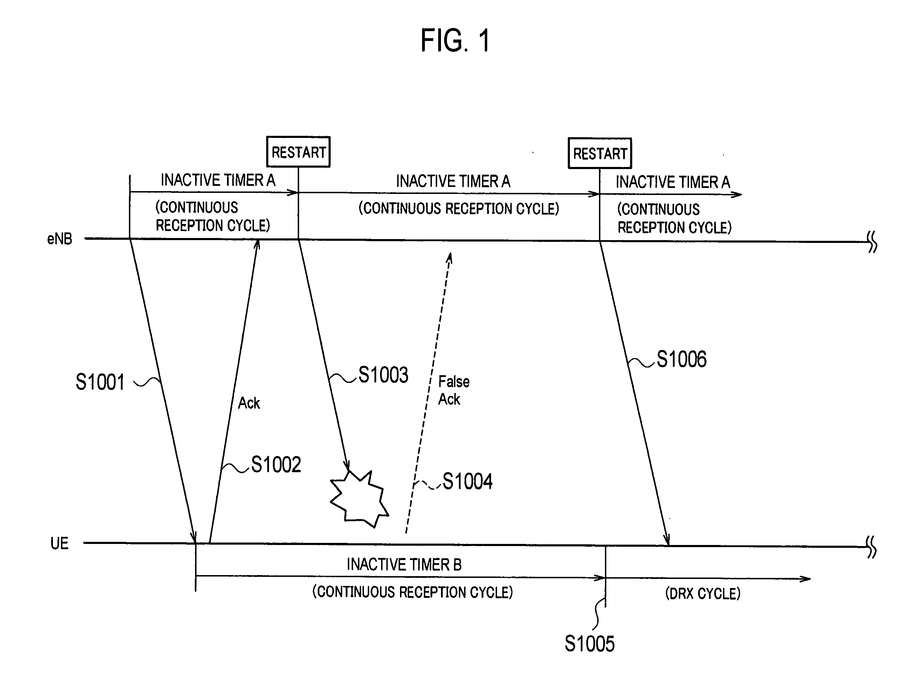

Here, an example of the above case will be described with reference to Fig. 1.

As shown in Fig. 1, in step S1001, upon occurrence of downlink data addressed to a mobile station UE, a radio base station eNB transmits a notification to the mobile station UE through an L1/L2 control channel. At this time, the mobile station UE is operating in a continuous reception cycle and this notification announces an assignment of a transmission opportunity in a downlink shared channel (for example, a DL-SCH: Downlink Shared Channel) used for transmitting the downlink data addressed to the mobile station UE. Thereafter, the radio base station eNB transmits the downlink data addressed to the mobile station UE, to the mobile station UE through the above transmission opportunity in the downlink shared channel, and starts an Inactive timer A for the mobile station UE.

Here, a reception cycle of downlink data in the mobile station UE that is managed by the radio base station eNB is a continuous reception cycle.

In step S1002, when receiving the above described downlink data, the mobile station UE operating in the continuous reception cycle starts an Inactive timer B, and transmits a transmission acknowledgment signal (Ack) for the downlink data, through an uplink shared channel.

In step S1003, upon occurrence of downlink data addressed to the mobile station UE, the radio base station eNB transmits a notification to the mobile station UE, which is operating in the continuous reception cycle, through the L1/L2 control channel, the notification announcing an assignment of a transmission opportunity in the downlink shared channel used for transmitting the downlink data addressed to the mobile station UE. Thereafter, the radio base station eNB transmits the downlink data addressed to the mobile station UE, to the mobile station UE through the above transmission opportunity in the downlink shared channel, and restarts (restarts) the Inactive timer A for the mobile station UE.

Here, the mobile station UE operating in the continuous reception cycle fails to receive the notification transmitted from the radio base station eNB through the L1/L2 control channel. For this reason, the mobile station UE cannot detect that the above described downlink data has been transmitted, so that the mobile station UE can neither receive the downlink data nor transmit a transmission acknowledgment signal (Ack/Nack) for the downlink data.

Meanwhile, in step S1004, even though the mobile station UE has transmitted no transmission acknowledgment signal (Ack/Nack) for the above described downlink data, the radio base station eNB determines that the radio base station eNB has received a transmission acknowledgment signal (Ack) for the downlink data (in a False Ack state).

Thereafter, in step S1005, the mobile station UE operating in the continuous reception cycle changes the reception cycle of the downlink data from the continuous reception cycle to a DRX cycle, because the mobile station UE has received no downlink data during a period from the start to expiration of the Inactive timer B.

Here, since the Inactive timer A has not yet expired (because the Inactive timer A has been restarted in step S1003), the reception cycle of the downlink data in the mobile station UE that is managed by the radio base station eNB remains to be the continuous reception cycle.

Accordingly, in step S1006, upon occurrence of downlink data addressed to the mobile station UE, the radio base station eNB transmits a notification to the mobile station UE, which is operating in the continuous reception cycle, through the L1/L2 control channel, the notification announcing an assignment of a transmission opportunity in the downlink shared channel used for transmitting the downlink data addressed to the mobile station UE. Thereafter, the radio base station eNB transmits the downlink data addressed to the mobile station UE, to the mobile station UE through the above transmission opportunity in the downlink shared channel, and restarts the Inactive timer A for the mobile station UE.

However, the mobile station UE is operating in the DRX reception cycle, and therefore cannot receive the downlink data.

Thus, the present invention was made in consideration of the above described problem, and an object thereof is to provide a reception cycle control method, a radio base station and a mobile station which can reduce a possibility of downlink data loss occurring due to disagreement between "a reception cycle of downlink data in a mobile station UE" that is managed by a radio base station eNB, and "a reception cycle of downlink data in the mobile station UE" that is managed by the mobile station UE.

A first aspect of the present invention is summarized as a reception cycle control method in which a mobile station and a radio base station control a reception cycle of downlink data in the mobile station for downlink data to be transmitted from the radio base station to the mobile station, including the steps of: (A) starting, at the radio base station, a transmitting-side timer upon transmission of downlink data to the mobile station; (B) changing, at the radio base station, a reception cycle of downlink data in the mobile station, when transmitting no downlink data during a period from start to expiration of the transmitting-side timer; (C) starting, at the mobile station, a receiving-side timer upon receipt of downlink data transmitted from the radio base station, the receiving-side timer set to expire later than the transmitting-side timer expires; and (D) changing, at the mobile station, a reception cycle of downlink data in the mobile station, when receiving no downlink data during a period from start to expiration of the receiving-side timer.

In the first aspect, in the steps (B) and (D), the reception cycle of the downlink data in the mobile station can be changed from a continuous reception cycle to a first discontinuous reception cycle.

In the first aspect, in each of the steps (B) and (D), the reception cycle of the downlink data in the mobile station can be changed from a first discontinuous reception cycle to a second first discontinuous reception cycle set longer than the first discontinuous reception cycle.

A second aspect of the present invention is summarized as a radio base station used in a mobile communication system in which a mobile station is configured to start a receiving-side timer upon receipt of downlink data transmitted from a radio base station, and to change a reception cycle of downlink data in the mobile station when receiving no downlink data during a period from start to expiration of the receiving-side timer, the radio base station including: a transmitting-side timer manager unit configured to start a transmitting-side timer upon transmission of downlink data to the mobile station, the transmitting-side timer set to expire earlier than the receiving-side timer provided in the mobile station expires; and a reception cycle controller unit configured to change the reception cycle of the downlink data in the mobile station, when no downlink data is transmitted during a period from start to expiration of the transmitting-side timer.

In the first aspect, when no downlink data is transmitted during a period from start to expiration of the transmitting-side timer, the reception cycle controller unit can be configured to change the reception cycle of the downlink data in the mobile station from a continuous reception cycle to a first discontinuous reception cycle.

In the second aspect, when no downlink data is transmitted during a period from start to expiration of the transmitting-side timer, the reception cycle controller unit is configured to change the reception cycle of the downlink data in the mobile station from a first discontinuous reception cycle to a second discontinuous reception cycle set longer than the first discontinuous reception cycle.

A third aspect of the present invention is summarized as a mobile station used in a mobile communication system in which a radio base station is configured to start a transmitting-side timer upon transmission of downlink data to the mobile station, and to change a reception cycle of downlink data in the mobile station when transmitting no downlink data during a period from start to expiration of the transmitting-side timer, including: a receiving-side timer manager unit configured to start a receiving-side timer set to expire later than the transmitting-side timer provided in the radio base station, upon receipt of downlink data transmitted from the radio base station; and a reception cycle controller unit configured to change the reception cycle of the downlink data in the mobile station, when no downlink data is received during a period from start to expiration of the receiving-side timer.

In the third aspect, when no downlink data is received during a period from start to expiration of the receiving-side timer, the reception cycle controller unit can be configured to change the reception cycle of the downlink data in the mobile station from a continuous reception cycle to a first discontinuous reception cycle.

In the third aspect, when no downlink data is received during a period from start to expiration of the receiving-side timer, the reception cycle controller unit can be configured to change the reception cycle of the downlink data in the mobile station from a first discontinuous reception cycle to a second discontinuous reception cycle set longer than the first discontinuous reception cycle.

As has been described above, the present invention can provide a reception cycle control method, a radio base station and a mobile station which are capable of reducing a possibility of downlink data loss occurring due to disagreement between "a reception cycle of downlink data in a mobile station UE" that is managed by a radio base station eNB, and "a reception cycle of downlink data in the mobile station UE" that is managed by the mobile station UE.

### Brief Description of the Drawings

[Fig. 1] Fig. 1 is a diagram for explaining operations of a conventional mobile communication system.
[Fig. 2] Fig. 2 is an overall configuration diagram of a mobile communication system according to a first embodiment of the present invention.
[Fig. 3] Fig. 3 is a functional block diagram of a mobile station according to the first embodiment of the present invention.
[Fig. 4] Fig. 4 is a functional block diagram of a radio base station according to the first embodiment of the present invention.
[Fig. 5] Fig. 5 is a diagram for explaining operations of the mobile communication system according to the first embodiment of the present invention.
[Fig. 6] Fig. 6 is a diagram showing an example of a hardware configuration of the mobile station according to the embodiment of the present invention.

### Best Modes for Carrying Out the Invention

### (Configuration of Mobile Communication System According to First Embodiment of the Present Invention)

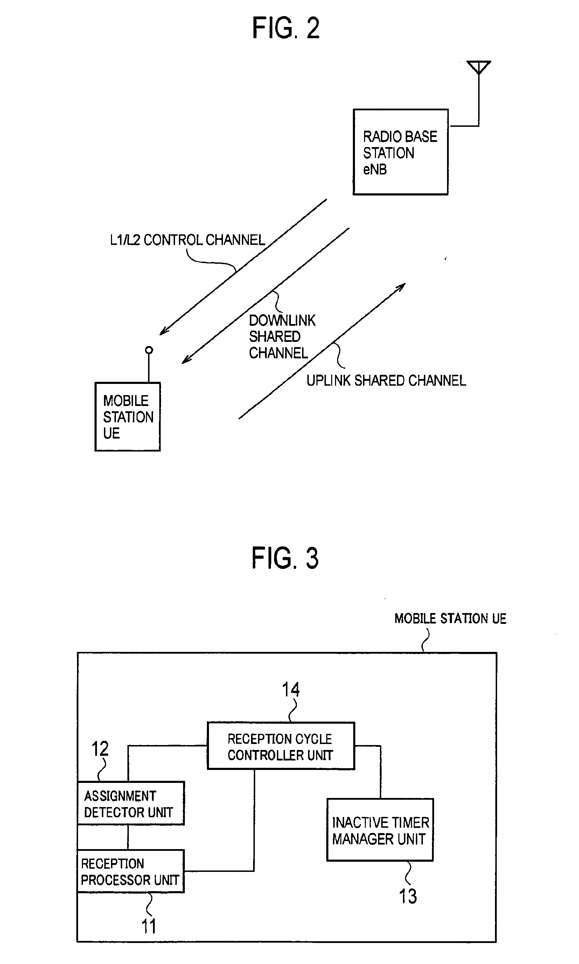

A configuration of a mobile communication system according to a first embodiment of the present invention will be described with reference to Fig. 2 to Fig. 4.

It is to be noted that the present embodiment will be described by taking as an example a mobile communication system provided with the LTE/SAE (System Architecture Evolution) architecture which is promoted by the 3GPP in standardization as shown in Fig. 2. However, the present invention is not limited only to this mobile communication system, but also applicable to mobile communication systems provided with other architectures.

As shown in Fig. 2, the mobile communication system according to this embodiment includes a radio base station eNB and a mobile station UE.

The radio base station eNB is configured to notify, to the mobile station UE, assignment of a transmission opportunity of a downlink shared channel used for transmitting downlink data addressed to the mobile station UE via a L1/L2 control channel.

Moreover, the radio base station eNB is configured to transmit the downlink data addressed to the mobile station UE, to the mobile station UE via the transmission opportunity of the downlink shared channel assigned to the mobile station UE.

Meanwhile, the mobile station UE is configured to transmit uplink data (such as user data or a transmission acknowledgment signal in response to the downlink data) via an uplink shared channel.

As shown in Fig. 3, the mobile station UE according to this embodiment includes a reception processor unit 11, an assignment detector unit 12, an Inactive timer manager unit 13, and a reception cycle controller unit 14.

The assignment detector unit 12 is configured to monitor the L1/L2 control channel, and to detect that a transmission opportunity in a downlink shared channel used for transmitting downlink data addressed to the mobile station UE is assigned to the mobile station UE.

Here, the assignment detector unit 12 is configured to change a cycle (timing) for monitoring the L1/L2 control channel based on a reception cycle of downlink data in the mobile station UE that is managed by the reception cycle controller unit 14.

The reception processor unit 11 is configured to perform reception processing on the downlink data, when the assignment detector unit 12 detects that the transmission opportunity in the downlink shared channel is assigned to the mobile station UE, the downlink data addressed to the mobile station UE and transmitted from the radio base station eNB in the transmission opportunity.

For example, the reception processor unit 11 is configured to transmit, in a MAC sub-layer, a transmission acknowledgment signal (Ack) for the downlink data, when succeeded in reception processing (such as error correction decoding processing) on the downlink data addressed to the mobile station UE and to transmit, in a MAC sub-layer, a transmission acknowledgment signal (Nack) for the downlink data when failed in the reception processing (such as error correction decoding processing) on the downlink data addressed to the mobile station UE.

The reception cycle controller unit 14 is configured to control the reception cycle of the downlink data in the mobile station UE.

To be more precise, the reception cycle controller unit 14 is configured to change the reception cycle of the downlink data in the mobile station UE, when no downlink data is received during a period from the start to expiration of an Inactive timer B (a receiving-side timer).

For example, the reception cycle controller unit 14 may be configured to change the reception cycle of the downlink data in the mobile station UE from the continuous reception cycle to a first DRX cycle, when the mobile station UE is operating in the continuous reception cycle and receives no downlink data during a period from the start to the expiration of the Inactive timer B.

Additionally, the reception cycle controller unit 14 may be configured to change the reception cycle of the downlink data in the mobile station UE from the first DRX cycle to a second DRX cycle (second discontinuous reception cycle), when the mobile station UE is operating in the first DRX cycle and receives no downlink data during a period from the start to expiration of the Inactive timer B. Here, it is assumed that the second DRX cycle is set longer than the first DRX cycle.

The Inactive timer manager unit 13 is configured to manage the Inactive timer B.

For example, the Inactive timer manager unit 13 is configured to start the Inactive timer B upon receipt of the downlink data transmitted from the radio base station eNB.

Here, the Inactive timer manager unit 13 may determine that the downlink data transmitted from the radio base station eNB is received, when the assignment detector unit 12 detects that a transmission opportunity in the downlink shared channel is assigned to the mobile station UE. Instead, the Inactive timer manager unit 13 may determine that the downlink data transmitted from the radio base station eNB is received, when the reception processor unit 11 succeeds in the reception processing (such as the error correction decoding processing) on the downlink data addressed to the mobile station UE.

Additionally, the Inactive timer manager unit 13 is configured to set the Inactive timer B, so that the Inactive timer B may expire later than an Inactive timer A (to be described later) provided in the radio base station eNB.

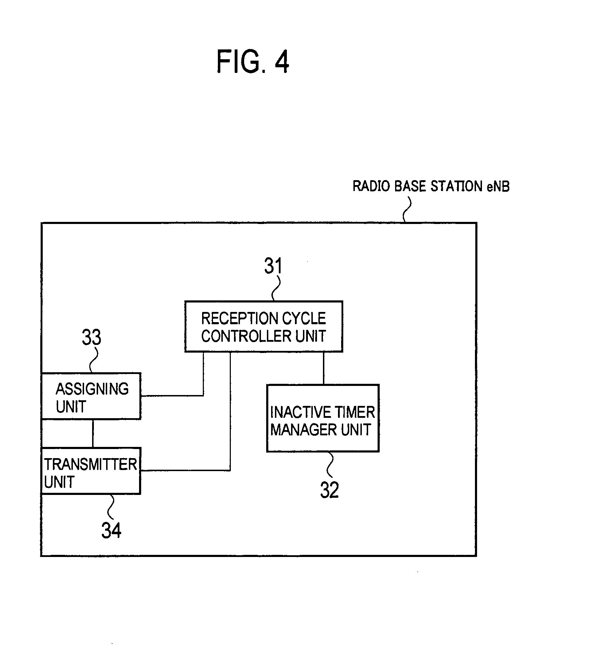

As shown in Fig. 4, the radio base station eNB includes a reception cycle controller unit 31, an Inactive timer manager unit 32, an assigning unit 33, and a transmitter unit 34.

The assigning unit 33 is configured to transmit a notification to the mobile station UE through an L1/L2 control channel, upon occurrence of downlink data addressed to a mobile station UE. This notification announces an assignment of a transmission opportunity in a downlink shared channel used for transmitting downlink data addressed to the mobile station UE.

Note that the assigning unit 33 is configured to make the above notification, by taking the reception cycle of the downlink data in the mobile station UE into consideration.

The transmitter unit 34 is configured to transmit the downlink data addressed to the mobile station UE, to the mobile station UE through a transmission opportunity of in a downlink shared channel assigned to the mobile station UE by the assigning unit 33.

The reception cycle controller unit 31 is configured to control a reception cycle of downlink data in each mobile station UE.

Specifically, the reception cycle controller unit 31 is configured to change the reception cycle of the downlink data in a certain mobile station UE, when the transmitter unit 34 transmits no downlink data to the mobile station UE during a period from the start to expiration of an Inactive timer A (a transmitting-side timer) for the mobile station UE.

For example, for a certain mobile station UE operating in the continuous reception cycle, the reception cycle controller unit 31 may be configured to change the reception cycle of the downlink data in the mobile station UE from the continuous reception cycle to the first DRX cycle, when the transmitter unit 34 transmits no downlink data to the mobile station UE during a period from the start to expiration of the Inactive timer A for the mobile station UE.

Additionally, for a certain mobile station UE operating in the first DRX cycle, the reception cycle controller unit 31 may be configured to change the reception cycle of the downlink data in the mobile station UE from the first DRX cycle to the second DRX cycle, when the transmitter unit 34 transmits no downlink data to the mobile station UE during a period from the start to expiration of the Inactive timer A for the mobile station UE.

The Inactive timer manager unit 32 is configured to manage an Inactive timer A for each mobile station UE.

For example, the Inactive timer manager unit 32 is configured to start the Inactive timer A for a mobile station UE, when the downlink data is transmitted to the mobile station UE.

Moreover, the Inactive timer manager unit 32 is configured to set the Inactive timer A for each mobile station UE, so that the Inactive timer A may expires earlier than the Inactive timer B provided to each mobile station UE.

Here, a part or all of functions (modules) constituting the mobile station UE shown in Fig. 3 and the radio base station eNB shown in Fig. 4 may be configured to be implemented by any one or a combination of a general-purpose processor, a DSP (Digital Signal Processor), an ASIC (Application Specific Integrated Circuit), a FPGA (Field Programmable Gate Array), a discrete gate, transistor logic, a discrete hardware component, or the like.

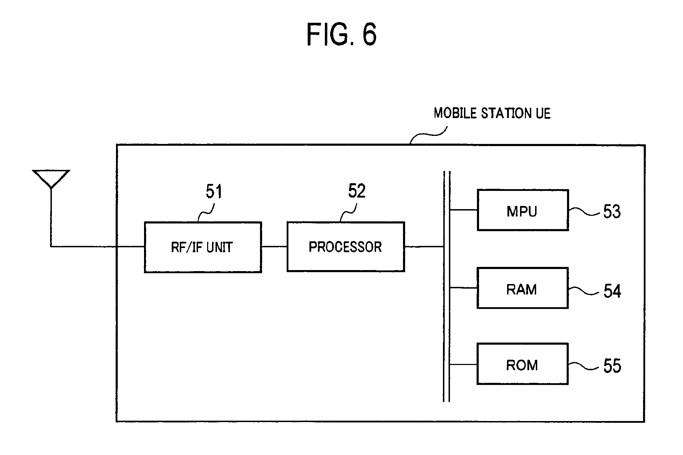

For example, a description will be given, as an example, of a case where the mobile station UE includes an RF/IF unit 51 which performs radio signal processing, a processor 52 which performs baseband signal processing, an MPU (Micro Processing Unit) 53 which executes an application, a RAM (Random Access Memory) 54, and a ROM (Read Only Memory) 55 as shown in Fig. 6.

In this case, the processor 52 of the mobile station UE may include any one or a combination of a general-purpose processor, a DSP, an ASIC, a FPGA, a discrete gate, transistor logic, a discrete hardware component, or the like in order to implement a part or all of the functions (module) constituting the mobile station UE shown in Fig. 3. Note that, although the mobile station UE has been described herein as an example, the radio base station eNB may be configured so that a part or all of the functions (modules) constituting the radio base station eNB shown in Fig. 4 may be implemented by a processor having the above described configuration.

Here, the general-purpose processor may be a micro processor or may be a conventional processor, a controller, a micro controller or a state machine.

Meanwhile, the processor may be implemented as a combination of any computing devices such as a combination of a DST and a micro processor, a combination of multiple micro processors, or a combination of one or more micro processors and a DSP core, or the like.

### (Operations of Mobile Communication System According to First Embodiment of the Present Invention)

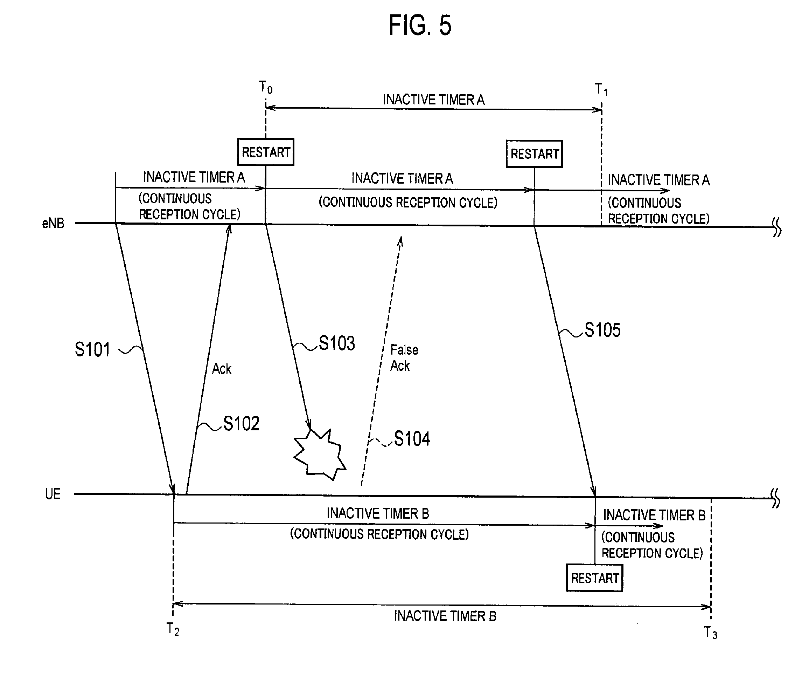

Operations of the mobile communication system according to the first embodiment of the present invention will be described with reference to Fig. 5.

As shown in Fig. 5, upon occurrence of downlink data addressed to a mobile station UE, the radio base station eNB transmits a notification to a mobile station UE, operating in a continuous reception cycle, through an L1/L2 control channel, the notification announcing an assignment of a transmission opportunity in a downlink shared channel used for transmitting downlink data addressed to the mobile station UE. Thereafter, the radio base station eNB transmits, to the mobile station UE, the downlink data addressed to the mobile station UE through the transmission opportunity in the downlink shared channel, and starts an Inactive timer A for the mobile station UE.

Here, the reception cycle of the downlink data in the mobile station UE managed by the radio base station eNB is the continuous reception cycle.

In step S102, upon receipt of the above-described downlink data, the mobile station UE operating in the continuous reception cycle starts the Inactive timer B, and transmits the transmission acknowledgment signal (Ack) for the downlink data through the uplink shared channel.

In step S103, when the downlink data addressed to the mobile station UR occurs, the radio base station eNB transmits a notification to the mobile station UE operating in the continuous reception cycle, through the L1/L2 control channel, the notification announcing an assignment of a transmission opportunity in the downlink shared channel for transmitting the downlink data addressed to the mobile station UE. Thereafter, the radio base station eNB transmits, to the mobile station UE through the above transmission opportunity in the downlink shared channel, the downlink data addressed to the mobile station UE, and restarts the Inactive timer A for the mobile station UE.

Here, the mobile station UE operating in the continuous reception cycle fails to receive the notification from the radio base station eNB through the L1/L2 control channel, and therefore cannot detect that the above described downlink data is transmitted. Therefore, the mobile station UE can neither receive the downlink data nor transmit a transmission acknowledgment signal (Ack/Nack) for the downlink data.

On the other hand, in step S104, even though the mobile station UE transmits no transmission acknowledgment signal (Ack/Nack) for the above described downlink data, the radio base station eNB determines that a transmission acknowledgment signal (Ack) for the downlink data is received (a False Ack state).

Here, since the Inactive timer A is not expired yet (because the Inactive timer A is restarted in step S103), the reception cycle of the downlink data in the mobile station UE managed by the radio base station eNB remains to be the continuous reception cycle.

Accordingly, in step S105, upon occurrence of downlink data addressed to the mobile station UE, the radio base station eNB transmits a notification to the mobile station UE, operating in the continuous reception cycle, through the L1/L2 control channel, the notification announcing an assignment of a transmission opportunity in a downlink shared channel used for transmitting the downlink data addressed to the mobile station UE. Thereafter, the radio base station eNB transmits, to the mobile station UE through the above transmission opportunity in the downlink shared channel, the downlink data addressed to the mobile station UE, and restarts the Inactive timer A for the mobile station UE.

Here, in the present embodiment, the Inactive timer B provided to the mobile station UE is set to expire later than the Inactive timer A for the mobile station UE. Accordingly, as shown in Fig. 5, for example, the Inactive timer A for the mobile station UE lasts for a length of (T1-T0) whereas the Inactive timer B provided on the mobile station lasts for a length of (T3-T2). Therefore, the Inactive timer B is not expired yet in step S105. Accordingly, the mobile station UE is operating in the continuous reception cycle and is able to receive the above-described downlink data. Hence, it is possible both to restart the Inactive timer B and to transmit the transmission acknowledgment signal (Ack) for the downlink data through the uplink shared channel.

Here, the above-described operations of the mobile station UE and the radio base station eNB may be implemented by hardware, may be implemented by a software module executed by the processor, or may be implemented by a combination of both.

More generally speaking, software supporting radio protocols including RRC, RLC, MAC, and PHY is called protocol stack (software pieces), and a lower level protocol (such as PHY or MAC) among those software pieces is more likely to be implemented into hardware as a semiconductor processor. In the mobile station UE in particular, these protocols tend to be implemented into hardware in the form of semiconductor processors under the demands of miniaturization and electricity saving. Furthermore, also in small base stations (femto-cells and Home-eNBs), these protocols may be implemented into hardware in the form of semiconductor processors under the similar demands of miniaturization and electricity saving.

The software module may be provided inside a storage medium of any form, such as RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

In order that a processor may read and write information from and to the above storage medium, the storage medium is connected to the processor. Alternatively, the above storage medium may be integrated into the processor. Additionally, these storage medium and processor may be provided inside an ASIC. This ASIC may be provided in each of mobile stations UE and the radio base station eNB. Alternatively, the storage medium and processor may be provided as discrete components in each of mobile stations UE and the radio base station eNB.

### (Advantageous Effects of Mobile Communication System According to First Embodiment of the Present Invention)

According to the mobile communication system of the first embodiment of the present invention, the Inactive timer B provided in the mobile station UE is set to expire later than an Inactive timer A provided in the radio base station eNB. Accordingly, it is possible to reduce a possibility of downlink data loss occurring due to disagreement between a reception cycle of downlink data in the mobile station UE that is managed by the reception cycle controller unit 31 of the radio base station eNB, and a reception cycle of downlink data in the mobile station UE that is managed by the reception cycle controller unit 14 of the mobile station UE.

Although the present invention has been described above in detail by using the embodiment, it is apparent to those skilled in the art that the present invention will not be limited to the embodiment described herein. The present invention can be implemented as corrected and modified aspects without departing from the spirit and scope of the present invention determined by description of the scope of claims. Accordingly, this description is given for the purpose of illustrative explanation, and has no restrictive implication on the present invention.

It is to be noted that the entire contents of Japanese Patent Application No. 2007-121198 (filed on May 1, 2007) are incorporated herein by reference.

### Industrial Applicability

As described above, a reception cycle control method, a radio base station, and a mobile station according to the present invention are capable of reducing possibilities of downlink data loss occurring attributable to disagreement between "a reception cycle of downlink data in a mobile station UE" which is managed by a radio base station eNB and "a reception cycle of downlink data in the mobile station UE" which is managed by the mobile station UE. Hence the present invention is useful for radio communications such as mobile communications.

## Claims

1. A reception cycle control method in which a mobile station and a radio base station control a reception cycle of downlink data in the mobile station for downlink data to be transmitted from the radio base station to the mobile station, comprising the steps of:
(A) starting, at the radio base station, a transmitting-side timer upon transmission of downlink data to the mobile station;
(B) changing, at the radio base station, a reception cycle of downlink data in the mobile station, when transmitting no downlink data during a period from start to expiration of the transmitting-side timer;
(C) starting, at the mobile station, a receiving-side timer upon receipt of downlink data transmitted from the radio base station, the receiving-side timer set to expire later than the transmitting-side timer expires; and
(D) changing, at the mobile station, a reception cycle of downlink data in the mobile station, when receiving no downlink data during a period from start to expiration of the receiving-side timer.

2. The reception cycle control method according to claim 1, wherein
in the steps (B) and (D), the reception cycle of the downlink data in the mobile station is changed from a continuous reception cycle to a first discontinuous reception cycle.

3. The reception cycle control method according to claim 1, wherein
in each of the steps (B) and (D), the reception cycle of the downlink data in the mobile station is changed from a first discontinuous reception cycle to a second first discontinuous reception cycle set longer than the first discontinuous reception cycle.

4. A radio base station used in a mobile communication system in which a mobile station is configured to start a receiving-side timer upon receipt of downlink data transmitted from a radio base station, and to change a reception cycle of downlink data in the mobile station when receiving no downlink data during a period from start to expiration of the receiving-side timer, the radio base station comprising:
a transmitting-side timer manager unit configured to start a transmitting-side timer upon transmission of downlink data to the mobile station, the transmitting-side timer set to expire earlier than the receiving-side timer provided in the mobile station expires; and
a reception cycle controller unit configured to change the reception cycle of the downlink data in the mobile station, when no downlink data is transmitted during a period from start to expiration of the transmitting-side timer.

5. The radio base station according to claim 4, wherein
when no downlink data is transmitted during a period from start to expiration of the transmitting-side timer, the reception cycle controller unit is configured to change the reception cycle of the downlink data in the mobile station from a continuous reception cycle to a first discontinuous reception cycle.

6. The radio base station according to claim 4, wherein
when no downlink data is transmitted during a period from start to expiration of the transmitting-side timer, the reception cycle controller unit is configured to change the reception cycle of the downlink data in the mobile station from a first discontinuous reception cycle to a second discontinuous reception cycle set longer than the first discontinuous reception cycle.

7. A mobile station used in a mobile communication system in which a radio base station is configured to start a transmitting-side timer upon transmission of downlink data to the mobile station, and to change a reception cycle of downlink data in the mobile station when transmitting no downlink data during a period from start to expiration of the transmitting-side timer, comprising:
a receiving-side timer manager unit configured to start a receiving-side timer set to expire later than the transmitting-side timer provided in the radio base station, upon receipt of downlink data transmitted from the radio base station; and
a reception cycle controller unit configured to change the reception cycle of the downlink data in the mobile station, when no downlink data is received during a period from start to expiration of the receiving-side timer.

8. The mobile station according to claim 7, wherein when no downlink data is received during a period from start to expiration of the receiving-side timer, the reception cycle controller unit is configured to change the reception cycle of the downlink data in the mobile station from a continuous reception cycle to a first discontinuous reception cycle.

9. The mobile station according to claim 7, wherein
when no downlink data is received during a period from start to expiration of the receiving-side timer, the reception cycle controller unit is configured to change the reception cycle of the downlink data in the mobile station from a first discontinuous reception cycle to a second discontinuous reception cycle set longer than the first discontinuous reception cycle.
